# FASCICULE DE BREVET EUROPEEN

(11) **EP 3 127 212 B1**
(45) Date de publication et mention de la délivrance du brevet: **08.09.2021**
(21) Numéro de dépôt: 15725714.8
(22) Date de dépôt: 01.04.2015
(51) Int. Cl.: H02J 7/14, F02N 11/08

(54) **SYSTEME DE STABILISATION D'UNE TENSION D'ALIMENTATION D'UN RESEAU ELECTRIQUE DE BORD D'UN VEHICULE AUTOMOBILE**
SYSTEM ZUR STABILISIERUNG EINER VERSORGUNGSSPANNUNG EINES STROMNETZES AN BORD EINES KRAFTFAHRZEUGS
SYSTEM FOR STABILIZING A SUPPLY VOLTAGE OF AN ONBOARD ELECTRICAL NETWORK OF AN AUTOMOTIVE VEHICLE

(30) Priorité: 03.04.2014 FR 1452968
(43) Date de publication de la demande: 08.02.2017
(73) Titulaire: Valeo Equipements Electriques Moteur, 94046 Créteil Cedex (FR)
(72) Inventeur: CHEMIN, Michaël, 94510 La Queue en Brie (FR); CHIAPPORI, Guido, 59000 Lille (FR); DELARUE, Philippe, 59655 Villeneuve d'Ascq Cedex (FR); LE MOIGNE, Philippe, 59651 Villeneuve d'Ascq Cedex (FR)
(74) Mandataire: Novembre, Christophe Adelphe
(86) Numéro de dépôt international: PCT/FR2015/050846
(87) Numéro de publication internationale: WO 2015/150703

(56) Documents cités:
- FR-A1- 2 985 046
- US-A- 5 844 440
- US-A1- 2011 196 570
- US-A1- 2014 035 292

## Description

### DOMAINE TECHNIQUE DE L'INVENTION.

De manière générale, l'invention concerne le domaine des démarreurs de moteurs thermiques dans les véhicules automobiles. Plus particulièrement, l'invention concerne un système de stabilisation d'une tension d'alimentation d'un réseau électrique de bord du véhicule au moment du démarrage.

### ARRIERE PLAN TECHNOLOGIQUE DE L'INVENTION.

Lors de la mise sous tension d'un démarreur pour assurer le démarrage du moteur thermique du véhicule, il se produit un courant d'appel important qui est proche du niveau de courant de court-circuit du démarreur, à savoir, un courant de l'ordre de 1000 ampères. Ce courant décroît ensuite en intensité à mesure que l'induit du démarreur, correspondant au rotor de la machine, monte en vitesse.

A ce pic initial de courant correspond une chute conséquente de la tension aux bornes de la batterie. D'autres chutes de tension moins importantes se produisent ensuite pendant la phase de démarrage et correspondent à des passages par des points morts hauts successifs du moteur thermique.

Le développement de démarreurs dits « renforcés » adaptés pour des systèmes d'arrêt/ relance automatique du moteur thermique (systèmes dits « Stop/Start » ou « Stop & Go » en terminologie anglaise) imposent aujourd'hui de nouvelles contraintes aux équipementiers automobiles, relatives au respect de seuils de tension minima de la batterie lors de l'appel de courant à la mise sous tension du démarreur. Ainsi, dans leurs cahiers de charges, les constructeurs automobiles définissent un premier seuil de tension compris habituellement entre 7 et 9 volts en dessous duquel ne doit pas descendre la tension de batterie. Pour les chutes de tension suivantes, correspondant aux points morts hauts du moteur thermique, la tension de batterie doit rester supérieure à un second seuil de tension compris habituellement entre 8 et 9 volts. Pendant le démarrage du moteur thermique, la tension du réseau de bord du véhicule reste ainsi à une valeur suffisante pour garantir le fonctionnement attendu des équipements des véhicules.

Les démarreurs renforcés ont généralement une puissance supérieure aux démarreurs classiques de manière à obtenir un démarrage rapide pour davantage de confort des utilisateurs. Il en découle un courant d'appel à la mise sous tension plus élevé et donc une première chute de la tension de batterie qui va au-delà des valeurs habituelles et cela en regard d'exigences élevées.

Ce problème de la chute de tension devient encore plus important dans le cas d'un véhicule équipé d'un système « Stop/Start ». Du fait de la fréquence élevée des redémarrages par rapport au démarrage initial d'un véhicule classique, les occupants du véhicule peuvent subir une gêne, et, de plus, la sécurité de certains équipements, comme une direction assistée, peut être compromise.

Dans la technique antérieure, des solutions ont été proposées au problème exposé ci-dessus.

Une première solution très utilisée, divulguée par la société VALEO EQUIPEMENTS ELECTRIQUES MOTEUR dans la demande de brevet FR2843841, consiste à connecter des condensateurs, ou tout autre source de tension secondaire, en série avec la batterie pendant le démarrage pour augmenter la tension d'alimentation du démarreur, et ainsi stabiliser la tension du réseau de bord.

Une solution analogue connue de l'entité inventive repose sur l'utilisation de convertisseurs électroniques élévateurs de tension afin d'éviter un niveau de tension trop bas sur le réseau de bord.

L'inconvénient majeur de ces condensateurs, convertisseurs, ou sources de tensions secondaires, réside dans les surcoûts substantiels qu'ils introduisent.

Une autre solution connue propose de commander le démarreur au moyen de deux relais, une temporisation et une résistance de limitation de courant. Dans une première phase de fonctionnement dont la durée est déterminée par la temporisation, une résistance additionnelle est insérée en série dans le circuit électrique de puissance du démarreur et limite le pic de courant initial. Dans une seconde phase de fonctionnement, la résistance additionnelle est sortie du circuit de puissance afin de permettre le passage d'un courant suffisant dans l'induit du démarreur et d'autoriser une montée en vitesse de celui-ci.

Outre l'inconvénient du coût additionnel qu'implique le relais de commande supplémentaire, la temporisation et la résistance de limitation de courant, l'introduction de ce relais supplémentaire, qui comporte des pièces mécaniques mobiles soumises à usure, a un impact négatif sur la tenue du démarreur en termes de nombre de cycles de démarrage que doit pouvoir supporter sans encombre le démarreur. La tenue du démarreur en nombre de cycles de démarrage est une contrainte particulièrement sévère pour les démarreurs destinés à des systèmes Stop/ Start. En effet, il est demandé à de tels démarreurs de tenir environ 300 000 cycles de démarrage, soit dix fois plus que les 30 000 cycles environ demandés aux démarreurs classiques.

Il a également été proposé de connecter un interrupteur constitué d'un transistor de puissance fonctionnant en commutation en série avec le démarreur. Le dispositif de commande du transistor mesure la tension de la batterie, et, en fonction de sa valeur, ouvre ou ferme l'interrupteur. L'interrupteur est commuté à l'état ouvert périodiquement, chaque fois que la tension de batterie chute en dessous d'une tension de référence.

Le principal inconvénient de cette solution est la commutation du courant générant des pics de tension inverse importants qui peuvent endommager la batterie.

De plus, un autre problème majeur est la compatibilité électromagnétique (CEM) du fait de la commutation de courants à des niveaux élevés.

Plus récemment la société VALEO EQUIPEMENTS ELECTRIQUES MOTEUR a proposé l'utilisation d'un filtre passe-bas pour restreindre l'appel de courant au démarrage et limiter ainsi la chute de tension.

Tel que cela est décrit dans la demande de brevet FR2978499, le principe de cette solution est un filtre inductif de grande puissance couplé à un circuit magnétique, connecté en série avec le moteur du démarreur.

Un inconvénient de ce filtre est que ses caractéristiques doivent être adaptées au modèle de démarreur utilisé. De plus, le circuit magnétique, qui présente un noyau ayant aussi une certaine masse, ne limite le courant qu'à une valeur imprécise, et, de ce fait, la tension de la batterie peut tomber en dessous de la valeur nominale.

Au vu de ces diverses solutions connues, il existe donc un besoin pour en supprimer les inconvénients, ou du moins, les atténuer.

Le document US2011/196570 décrit un système selon le préambule de la revendication 1.

### DESCRIPTION GENERALE DE L'INVENTION.

La présente invention vise donc un système de stabilisation d'une tension d'alimentation d'un réseau électrique de bord d'un véhicule automobile.

Le système dont il s'agit est du type de ceux limitant une variation de tension d'une batterie alimentant le réseau électrique de bord au moment d'un démarrage d'un moteur thermique du véhicule au moyen d'un démarreur électrique relié à ce réseau.

Plus généralement, le système de l'invention est du type de ceux limitant une variation de tension d'une batterie alimentant le réseau électrique de bord au moment d'une activation d'un équipement électrique relié à ce réseau.

En particulier, l'équipement électrique est une machine électrique. L'activation correspond alors notamment à une mise en rotation de ladite machine, en particulier lors du démarrage du véhicule ou d'un moteur thermique du véhicule. Plus particulièrement, la machine électrique entraîne un compresseur de suralimentation de véhicule automobile destiné à un système de suralimentation d'un moteur thermique du véhicule et/ou la machine électrique comprise dans un démarreur.

Le système selon l'invention est remarquable en ce qu'il comprend une résistance variable en fonction de cette variation de tension connectée en série avec la batterie et l'équipement électrique.

Plus particulièrement, le système selon l'invention est remarquable en ce qu'il comprend une résistance variable en fonction de cette variation de tension connectée en série avec la batterie et l'équipement électrique ; et une résistance constante en parallèle de ladite résistance variable.

Cette résistance variable est avantageusement contrôlée par une boucle de courant principale en fonction d'une intensité de référence générée par une boucle de tension en fonction de la variation de tension de la batterie par rapport à une tension de référence.

La résistance variable est constituée de préférence de plusieurs transistors de puissance en parallèle.

On tire bénéfice du fait que ces transistors fonctionnent en régime saturé si la tension d'alimentation est supérieure ou égale en valeur absolue à la tension de référence en valeur absolue, ou en régime linéaire si la tension d'alimentation est inférieure en valeur absolue à la tension de référence en valeur absolue.

La boucle de courant principale est avantageusement formée de plusieurs boucles de courant secondaires contrôlant chacune chacun des transistors en fonction de l'intensité de référence.

De préférence, les transistors sont connectés entre l'équipement électrique et une masse à un potentiel fixe.

Alternativement, les transistors sont connectés entre la batterie et l'équipement électrique.

Chacune des boucles de courant secondaires comprend avantageusement en série avec chacun des transistors un élément de mesure de courant, en particulier un shunt. Dans une variante, le shunt est connecté à cette masse. Dans une autre variante, le shunt est connecté à l'équipement électrique. Notamment, le shunt mesure la portion de courant de l'équipement électrique qui circule dans le transistor respectif.

Fort avantageusement, la boucle de tension et les boucles de courant secondaires comprennent des moyens de contrôle analogiques, de préférence des amplificateurs opérationnels.

Dans le système de stabilisation d'une tension d'alimentation d'un réseau électrique de bord d'un véhicule automobile selon l'invention les transistors utilisés sont avantageusement de type MOSFET (acronyme de "Metal Oxyde Semiconductor Field Effect Transistor" en anglais, c'est-à-dire "Transistor à Effet de Champ à Semi-conducteur à Oxyde Métallique")

L'invention concerne aussi un système de stabilisation d'une tension d'alimentation d'un réseau électrique de bord d'un véhicule automobile, du type de ceux limitant une variation de tension d'une batterie alimentant ledit réseau au moment de l'activation d'un équipement électrique dudit véhicule relié audit réseau, caractérisé en ce qu'il comprend :
- une résistance variable en fonction de ladite variation de tension connectée en série avec ladite batterie et ledit équipement, ladite résistance variable étant contrôlée par une boucle de courant principale en fonction d'une intensité de référence générée par une boucle de tension en fonction de ladite variation de tension par rapport à une tension de référence ;
- une résistance constante en parallèle de ladite résistance variable.

Le système peut comprendre l'une quelconque des caractéristiques décrites précédemment.

Selon un mode de réalisation compatible avec les autres modes de réalisation, ladite boucle de courant principale est formée de plusieurs boucles de courant secondaires pour commander individuellement lesdits transistors en fonction de ladite intensité de référence.

L'invention concerne aussi un démarreur de véhicule automobile remarquable en ce qu'il comporte un système de stabilisation d'une tension d'alimentation d'un réseau électrique de bord présentant les caractéristiques ci-dessus intégré.

L'invention concerne également un compresseur de suralimentation de véhicule automobile destiné à un système de suralimentation d'un moteur thermique remarquable en ce qu'il comporte un système de stabilisation d'une tension d'alimentation d'un réseau électrique de bord présentant les caractéristiques ci-dessus intégré.

Les spécifications détaillées de l'invention sont données dans la description qui suit en liaison avec les dessins ci-annexés. Il est à noter que ces dessins n'ont d'autre but que d'illustrer le texte de la description et ne constituent en aucune sorte une limitation de la portée de l'invention.

### BREVE DESCRIPTION DES DESSINS.

Les **Figures 1a et 1b** montrent respectivement une chute de tension d'une batterie alimentant un réseau électrique de bord de véhicule automobile au moment du lancement d'un équipement électrique, et le pic d'intensité correspondant, sans le système de stabilisation (traits pleins) et avec le système de stabilisation selon l'invention (traits en pointillé).
La **Figure 2** est un schéma de principe simplifié d'un mode de réalisation préféré du système de stabilisation d'une tension d'alimentation d'un réseau électrique de bord d'un véhicule automobile selon l'invention.

### DESCRIPTION DES MODES DE REALISATION PREFERES DE L'INVENTION.

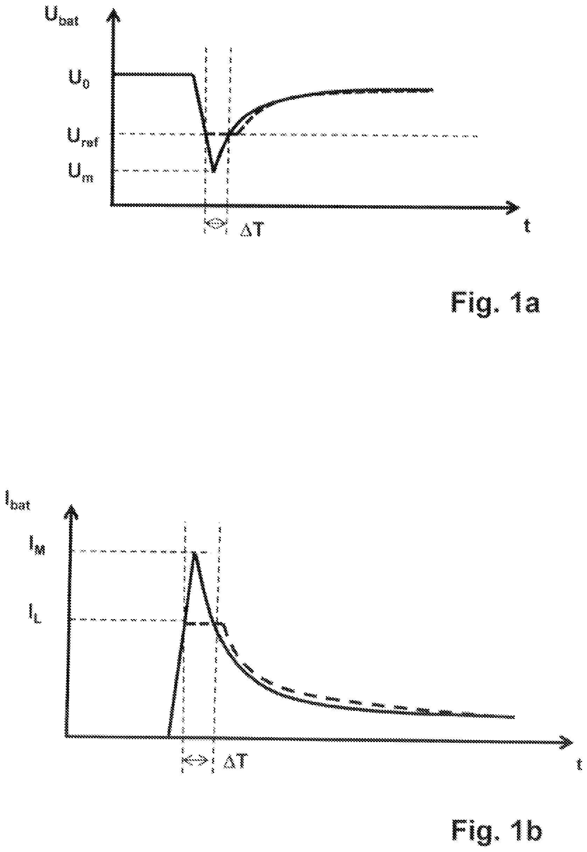

La **Figure 1a** montre en traits pleins l'évolution dans le temps de la tension U_{bat} aux bornes d'une batterie alimentant un réseau électrique de bord d'un véhicule automobile auquel est connecté un démarreur, au moment du lancement du moteur thermique, en l'absence de stabilisation.

A partir d'une valeur nominale U₀ (supposée positive) correspondant à une charge normale de la batterie, de l'ordre de 12 V, il se produit une variation de tension Uₘ - U₀ importante de la batterie, jusqu'au moment où, le moteur thermique étant lancé, la batterie revient à sa tension nominale U₀.

Le minimum de tension Uₘ peut être très inférieur à une tension de référence U_{ref}, de l'ordre de 7 à 9 V, fixée par les constructeurs d'automobiles comme seuil à ne pas dépasser.

Au minimum de tension Uₘ, correspond un pic d'intensité Iₘ du courant I_{bat} débité par la batterie, comme le montre bien la **Figure 1b** (traits plein).

En intervenant pendant tout l'intervalle de temps ΔT où la tension U_{bat} de la batterie tend à devenir inférieure à la tension de référence U_{ref}, le système de stabilisation selon l'invention permet de maintenir la tension de batterie U_{bat} à cette tension de référence U_{ref}, comme le montre bien en traits en pointillés la **Figure 1a**.

L'amplitude du pic d'intensité du courant débité I_{bat} sur le même intervalle ΔT est atténuée et présente une valeur limitée IL, comme le montre bien en traits en pointillés la **Figure 1b****.**

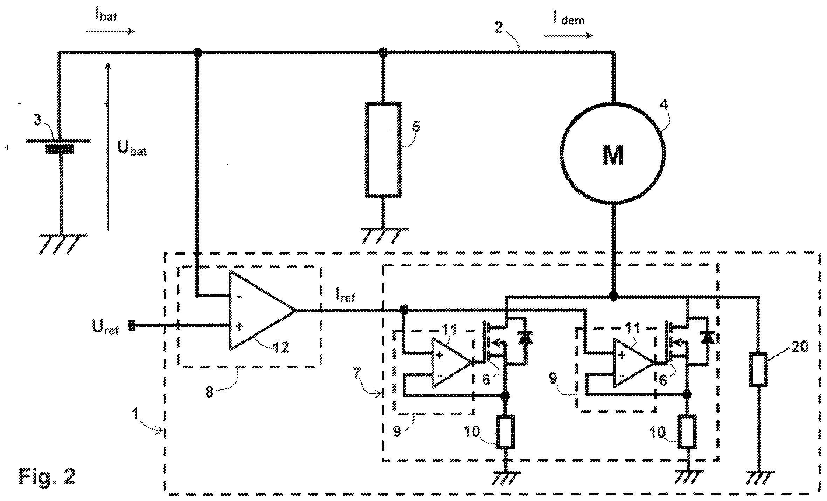

La **Figure 2** montre schématiquement la mise en œuvre du système de stabilisation 1 selon l'invention dans un réseau électrique de bord 2 d'un véhicule automobile.

Une batterie 3 alimente ce réseau 2 (la masse étant connectée au pôle négatif de la batterie 3) auquel est relié un démarreur électrique 4, apte à être accouplé mécaniquement au moteur thermique du véhicule au moment du lancement de celui-ci.

Diverses autres charges électriques 5 sont habituellement reliées au réseau de bord 2.

Ce sont ces charges électriques 5 qui peuvent avoir un fonctionnement perturbé par la chute de tension de la batterie 3 au moment du démarrage.

Le système de stabilisation 1 selon l'invention est un régulateur linéaire conçu pour stabiliser la tension de batterie U_{bat} pendant la phase de démarrage, en limitant l'appel de courant I_{dem} du démarreur 4 pour maintenir la tension de batterie U_{bat} au moins à une tension de référence U_{ref}.

Le régulateur linéaire 1 comprend des transistors 6 de type MOSFET en parallèle formant une résistance variable et une résistance constante 20 en parallèle avec la résistance variable. L'ensemble constitué de la résistance variable et de la résistance constante 20 est en série avec le démarreur 4.

La résistance constante 20 a une valeur qui est choisie en fonction de l'environnement, en particulier de l'impédance du câblage, de la batterie 3, ou du démarreur 4. Par exemple, la résistance constante 20 a une valeur comprise entre 5 et 40 mΩ, voire entre 5 et 20 mΩ. En particulier, la résistance 20 a une valeur de 10 mΩ.

Tant que la tension de batterie U_{bat} reste au dessus de la tension de référence U_{ref}, les transistors 6 sont fermés (en régime saturé) et la résistance variable est équivalente à une simple résistance de faible valeur R_{DS_ON} (de l'ordre de 1 mΩ). Le régulateur 1 a une résistance égale à la résistance équivalente de la résistance variable en parallèle avec la résistance constante 20.

Si la tension de batterie U_{bat} tombe en dessous de la tension de référence U_{ref} (variation de tension négative), la résistance variable du système de stabilisation 1 est activée et les transistors 6 commencent à fonctionner en régime linéaire comme une résistance variable pour limiter le courant I_{dem} du démarreur 4.

Pendant cette phase, les transistors 6 sont commandés par deux boucles de régulation 7, 8, une boucle de courant principal 7 et une boucle de tension 8.

La boucle de courant principale 7, d'une part, contrôle le courant circulant dans le démarreur 4 en fonction d'une intensité de référence I_{ref}.

La boucle de tension 8, d'autre part, est en charge de fournir l'intensité de référence I_{ref} nécessaire pour maintenir la tension de batterie U_{bat}, qui est aussi celle du réseau 2, au dessus de la tension de référence U_{ref}.

En tenant compte de la dissipation thermique des transistors 6 travaillant en régime linéaire, il est nécessaire d'implémenter plusieurs transistors 6 en parallèle.

En effet, comme cela a déjà été indiqué, le démarrage du moteur thermique exige une intensité I_{dem} de l'ordre de 1000 A et il n'existe pas actuellement de transistor de puissance capable de supporter une telle intensité sous quelques volts, c'est-à-dire une puissance de plusieurs kilowatts, en régime linéaire.

Malheureusement, quel que soit le soin apporté à l'appariement des transistors 6 pour une caractéristique déterminée, par exemple la transconductance gₘ, la dispersion des autres paramètres (par exemple, la tension de seuil Vₜₕ) et les tolérances du montage mécanique conduit habituellement à des ensembles déséquilibrés.

Si plusieurs transistors 6 de type MOSFET sont connectés en parallèle sans résistance de grille, la tension grille-source est la même pour tous. Dans ces conditions, la tension de seuil Vₜₕ n'étant pas identique pour tous les transistors 6, il peut y avoir dans les pires des cas de très grandes différences dans le partage du courant.

Ce problème est même accru en utilisant la nouvelle génération de transistors MOSFET supportant des fortes intensités à cause de sa transconductance élevée. Pour une même tension grille-source de commande de chacun des transistors 6, les courants dans les transistors 6 peuvent très différents, et par conséquent, les dissipations thermiques peuvent être très différentes.

Le système de stabilisation 1 selon l'invention comporte donc une boucle de courant principale 7 formée de plusieurs boucles de courant secondaires 9 pour commander individuellement les transistors 6. De cette manière, la dissipation thermique des transistors 6 est équilibrée.

Chaque boucle de courant secondaire utilise un shunt 10 connecté à la masse pour mesurer un courant de source (dans le cas d'un MOSFET canal N tel que représenté; de drain, pour un MOSFET canal P) dans chaque transistor 6 représentant la même fraction du courant I_{dem} circulant dans le démarreur 4 et le comparer à l'intensité de référence I_{ref} au moyen d'un amplificateur opérationnel 11.

Cet amplificateur opérationnel 11 génère en sortie une tension grille-source qui commande l'impédance du transistor 6 en régime linéaire pour asservir le courant de source à la fraction de l'intensité de référence I_{ref} requise.

Chacun des transistors 6 disposant d'une contre-réaction, la même intensité de référence I_{ref}, ou plus exactement une tension représentative de cette intensité de référence I_{ref}, peut être appliquée sur tous les amplificateurs opérationnels 11 qui les pilotent, quel que soit le nombre de transistors 6 en parallèle.

La tension représentative de cette intensité de référence I_{ref} est générée par un autre amplificateur opérationnel 12 en fonction d'une différence de tension U_{ref} - U_{bat} de la batterie 3 par rapport à la tension de référence U_{ref}, la tension U_{bat} du réseau 2 étant appliquée à l'entrée inverseuse et la tension de référence U_{ref} étant appliquée à l'entrée non-inverseuse.

Le système de stabilisation 1 selon l'invention présente l'avantage d'éviter les problèmes de compatibilité électromagnétique parce qu'il travaille en régime linéaire, et non en commutation.

De plus, les moyens de contrôle des boucles de tension et de courant 7, 8, 9 étant analogiques, basés sur des amplificateurs opérationnels 11, 12, il n'est pas nécessaire d'utiliser des microcontrôleurs complexes.

En outre, la résistance constante 20 permet, dans un premier temps, de limiter le courant I_{dem} du démarreur 4 sans faire appel à la résistance variable, notamment sans faire appel aux transistors 6. Lorsque, par la suite, la tension de batterie U_{bat} devient inférieure à la tension de référence U_{ref}, la résistance variable permet de limiter le courant I_{dem} du démarreur 4 à une valeur pour maintenir la tension de batterie U_{bat} supérieure à la tension de référence U_{ref}. Grâce à la résistance constante 20, on peut utiliser moins de transistors 6 que dans un système qui ne comprendrait qu'une résistance variable, car la résistance constante 20 partage la dissipation thermique et réduit le stress thermique des transistors 6.

Comme il va de soi, l'invention ne se limite pas aux seuls modes d'exécution préférentiels décrits ci-dessus.

Notamment, le type de transistors de puissance 6 cité n'est pas limitatif; l'utilisation d'autres éléments à semi-conducteurs susceptibles de réaliser les mêmes fonctions que les MOSFETs 6 ne sortirait pas du cadre de l'invention.

La mise en œuvre d'amplificateurs opérationnels 11 intégrés n'est aussi qu'une possibilité pour réaliser les moyens de contrôle analogiques des boucles de courant 7, 9 ou de la boucle de tension 12; l'homme de métier pourra autant que de besoin implémenter les mêmes fonctions à moindre coût avec des éléments actifs discrets ou hybrides.

Dans l'exemple décrit le système de régulation 1 est situé entre le démarreur 4 et la masse. Cependant, le système 1 pourrait être situé entre la batterie 3 et le démarreur 4 sans modification du fonctionnement décrit précédemment. Plus particulièrement, le système 1 pourrait être situé sur la branche du démarreur 4 entre le démarreur 4 et l'extrémité de la branche qui est commune à la batterie 3.

L'exemple aurait pu être décrit de façon similaire avec un compresseur de suralimentation électrique à la place du démarreur 4, en particulier dans une application où le compresseur est activé transitoirement au démarrage du moteur thermique du véhicule.

L'invention embrasse toutes les variantes possibles de réalisation dans la limite de l'objet des revendications ci-après.

## Revendications

1. Système de stabilisation (1) d'une tension d'alimentation (U_{bat}) d'un réseau électrique de bord (2) d'un véhicule automobile, du type de ceux limitant une variation de tension d'une batterie (3) alimentant ledit réseau (2) au moment de l'activation d'un équipement électrique dudit véhicule (4) relié audit réseau (2), comprenant :
- une résistance variable (6) en fonction de ladite variation de tension connectée en série avec ladite batterie (3) et ledit équipement (4),
- une résistance constante (20) en parallèle de ladite résistance variable, **caractérisé en ce que** ladite résistance variable (6) est contrôlée par une boucle de courant principale (7) en fonction d'une intensité de référence (I_{ref}) générée par une boucle de tension (8) en fonction de ladite variation de tension par rapport à une tension de référence (U_{ref}).

2. Système de stabilisation (1) d'une tension d'alimentation (U_{bat}) d'un réseau électrique de bord d'un véhicule automobile selon la revendication 1, **caractérisé en ce que** ladite résistance variable (6) est constituée de plusieurs transistors de puissance en parallèle.

3. Système de stabilisation (1) d'une tension d'alimentation (U_{bat}) d'un réseau électrique de bord (2) d'un véhicule automobile selon la revendication 2, **caractérisé en ce que** lesdits transistors (6) fonctionnent en régime saturé si ladite tension d'alimentation (U_{bat}) est supérieure ou égale en valeur absolue à ladite tension de référence (U_{ref}) en valeur absolue, ou en régime linéaire si ladite de tension d'alimentation (U_{bat}) est inférieure en valeur absolue à ladite tension de référence (U_{ref}) en valeur absolue.

4. Système de stabilisation (1) d'une tension d'alimentation (U_{bat}) d'un réseau électrique de bord (2) d'un véhicule automobile selon la revendication 2 ou 3, **caractérisé en ce que** ladite boucle de courant principale (7) est formée de plusieurs boucles de courant secondaires (9) pour commander individuellement lesdits transistors (6) en fonction de ladite intensité de référence (I_{ref}).

5. Système de stabilisation (1) d'une tension d'alimentation (U_{bat}) d'un réseau électrique de bord (2) d'un véhicule automobile selon la revendication 4, **caractérisé en ce que** chacune desdites boucles de courant secondaires (9) comprend en série avec chacun desdits transistors (6) un shunt de mesure de courant (10).

6. Système de stabilisation (1) d'une tension d'alimentation (U_{bat}) d'un réseau électrique de bord (2) d'un véhicule automobile selon la revendication 4 ou 5, **caractérisé en ce que** ladite boucle de tension (8) et lesdites boucles de courant secondaires (9) comprennent des moyens de contrôle analogiques (11), de préférence des amplificateurs opérationnels.

7. Système de stabilisation (1) d'une tension d'alimentation (Ubat) d'un réseau électrique de bord (2) d'un véhicule automobile selon l'une des revendications 2 à 6, **caractérisé en ce que** lesdits transistors (6) sont connectés entre ledit équipement électrique (4) et une masse à un potentiel fixe.

8. Système de stabilisation selon la revendication 7, dans lequel la résistance constante (20) est connectée entre ledit équipement électrique (4) et ladite masse.

9. Système de stabilisation (1) d'une tension d'alimentation (U_{bat}) d'un réseau électrique de bord (2) d'un véhicule automobile selon l'une quelconque des revendications 2 à 8, **caractérisé en ce que** lesdits transistors (6) sont de type MOSFET.

10. Démarreur de véhicule automobile, **caractérisé en ce qu'**il comporte un système de stabilisation (1) d'une tension d'alimentation (U_{bat}) d'un réseau électrique de bord (2) selon l'une quelconque des revendications 1 à 9 intégré.

11. Compresseur de suralimentation de véhicule automobile destiné à un système de suralimentation d'un moteur thermique **caractérisé en ce qu'**il comporte un système de stabilisation d'une tension d'alimentation d'un réseau électrique de bord (2) selon l'une quelconque des revendications 1 à 9 intégré.

## Patentansprüche

1. System zur Stabilisierung (1) einer Versorgungsspannung (U_{bat}) eines Bordstromnetzes (2) eines Kraftfahrzeugs, vom Typ derjenigen, die eine Spannungsänderung einer das Netz (2) versorgenden Batterie (3) zum Zeitpunkt der Aktivierung einer mit dem Netz (2) verbundenen elektrischen Einrichtung (4) des Fahrzeugs begrenzen, umfassend:
- einen in Abhängigkeit von der Spannungsänderung variablen Widerstand (6), der mit der Batterie (3) und der Einrichtung (4) in Reihe geschaltet ist,
- einen konstanten Widerstand (20), der zu dem variablen Widerstand parallelgeschaltet ist, **dadurch gekennzeichnet, dass** der variable Widerstand (6) von einer Hauptstromschleife (7) in Abhängigkeit von einer Referenzstromstärke (I_{ref}) gesteuert wird, die von einer Spannungsschleife (8) in Abhängigkeit von der Spannungsänderung in Bezug auf eine Referenzspannung (U_{ref}) erzeugt wird.

2. System zur Stabilisierung (1) einer Versorgungsspannung (U_{bat}) eines Bordstromnetzes eines Kraftfahrzeugs nach Anspruch 1, **dadurch gekennzeichnet, dass** der variable Widerstand (6) aus mehreren parallelgeschalteten Leistungstransistoren besteht.

3. System zur Stabilisierung (1) einer Versorgungsspannung (U_{bat}) eines Bordstromnetzes (2) eines Kraftfahrzeugs nach Anspruch 2, **dadurch gekennzeichnet, dass** die Transistoren (6) im gesättigten Betrieb arbeiten, falls die Versorgungsspannung (U_{bat}) dem absoluten Betrag nach größer oder gleich dem absoluten Betrag der Referenzspannung (U_{ref}) ist, oder im linearen Betrieb, falls die Versorgungsspannung (U_{bat}) dem absoluten Betrag nach kleiner als der absolute Betrag der Referenzspannung (U_{ref}) ist.

4. System zur Stabilisierung (1) einer Versorgungsspannung (U_{bat}) eines Bordstromnetzes (2) eines Kraftfahrzeugs nach Anspruch 2 oder 3, **dadurch gekennzeichnet, dass** die Hauptstromschleife (7) von mehreren sekundären Stromschleifen (9) zur individuellen Steuerung der Transistoren (6) in Abhängigkeit von der Referenzstromstärke (I_{ref}) gebildet wird.

5. System zur Stabilisierung (1) einer Versorgungsspannung (U_{bat}) eines Bordstromnetzes (2) eines Kraftfahrzeugs nach Anspruch 4, **dadurch gekennzeichnet, dass** jede der sekundären Stromschleifen (9) in Reihe mit jedem der Transistoren (6) einen Strommessshunt (10) umfasst.

6. System zur Stabilisierung (1) einer Versorgungsspannung (U_{bat}) eines Bordstromnetzes (2) eines Kraftfahrzeugs nach Anspruch 4 oder 5, **dadurch gekennzeichnet, dass** die Spannungsschleife (8) und die sekundären Stromschleifen (9) analoge Steuerungsmittel (11) umfassen, vorzugsweise Operationsverstärker.

7. System zur Stabilisierung (1) einer Versorgungsspannung (U_{bat}) eines Bordstromnetzes (2) eines Kraftfahrzeugs nach einem der Ansprüche 2 bis 6, **dadurch gekennzeichnet, dass** die Transistoren (6) zwischen die elektrische Einrichtung (4) und eine auf einem festen Potential liegende Masse geschaltet ist.

8. System zur Stabilisierung nach Anspruch 7, wobei der konstante Widerstand (20) zwischen die elektrische Einrichtung (4) und die Masse geschaltet ist.

9. System zur Stabilisierung (1) einer Versorgungsspannung (U_{bat}) eines Bordstromnetzes (2) eines Kraftfahrzeugs nach einem der Ansprüche 2 bis 8, **dadurch gekennzeichnet, dass** die Transistoren (6) vom Typ MOSFET sind.

10. Anlasser eines Kraftfahrzeugs, **dadurch gekennzeichnet, dass** er ein System zur Stabilisierung (1) einer Versorgungsspannung (U_{bat}) eines Bordstromnetzes (2) nach einem der Ansprüche 1 bis 9 aufweist.

11. Kompressor eines Kraftfahrzeugs, der für ein Aufladesystem eines Verbrennungsmotors bestimmt ist, **dadurch gekennzeichnet, dass** er ein System zur Stabilisierung einer Versorgungsspannung eines Bordstromnetzes (2) nach einem der Ansprüche 1 bis 9 aufweist.

## Claims

1. System (1) for stabilizing a supply voltage (U_{bat}) of an onboard electrical network (2) of a motor vehicle, of the type limiting a variation in the voltage of a battery (3) supplying power to said network (2) at the moment of activation of an electrical apparatus of said vehicle (4) which is connected to said network (2), comprising:
- a variable resistor (6) that is variable as a function of said voltage variation connected in series with said battery (3) and said apparatus (4);
- a constant resistor (20) in parallel with said variable resistor, **characterized in that** said variable resistor (6) is controlled by a main current loop (7) as a function of a reference current (I_{ref}) generated by a voltage loop (8) as a function of said voltage variation with respect to a reference voltage (U_{ref}).

2. System (1) for stabilizing a supply voltage (U_{bat}) of an onboard electrical network of a motor vehicle according to Claim 1, **characterized in that** said variable resistor (6) consists of a plurality of power transistors in parallel.

3. System (1) for stabilizing a supply voltage (U_{bat}) of an onboard electrical network (2) of a motor vehicle according to Claim 2, **characterized in that** said transistors (6) operate in saturated mode if said supply voltage (U_{bat}) is higher than or equal to, in terms of absolute value, said reference voltage (U_{ref}) in terms of absolute value, or in linear mode if said supply voltage (U_{bat}) is lower than, in terms of absolute value, said reference voltage (U_{ref}) in terms of absolute value.

4. System (1) for stabilizing a supply voltage (U_{bat}) of an onboard electrical network (2) of a motor vehicle according to Claim 2 or 3, **characterized in that** said main current loop (7) is formed of a plurality of secondary current loops (9) for individually controlling said transistors (6) as a function of said reference current (I_{ref}) .

5. System (1) for stabilizing a supply voltage (U_{bat}) of an onboard electrical network (2) of a motor vehicle according to Claim 4, **characterized in that** each of said secondary current loops (9) comprises, in series with each of said transistors (6), a current measurement shunt (10) .

6. System (1) for stabilizing a supply voltage (U_{bat}) of an onboard electrical network (2) of a motor vehicle according to Claim 4 or 5, **characterized in that** said voltage loop (8) and said secondary current loops (9) comprise analogue control means (11), preferably operational amplifiers.

7. System (1) for stabilizing a supply voltage (U_{bat}) of an onboard electrical network (2) of a motor vehicle according to one of Claims 2 to 6, **characterized in that** said transistors (6) are connected between said electrical apparatus (4) and a ground at a fixed potential.

8. Stabilization system according to Claim 7, wherein the constant resistor (20) is connected between said electrical apparatus (4) and said ground.

9. System (1) for stabilizing a supply voltage (U_{bat}) of an onboard electrical network (2) of a motor vehicle according to any one of Claims 2 to 8, **characterized in that** said transistors (6) are of MOSFET type.

10. Motor vehicle starter, **characterized in that** it comprises a system (1) for stabilizing a supply voltage (U_{bat}) of an onboard electrical network (2) according to any one of Claims 1 to 9.

11. Motor vehicle supercharger intended for a supercharger system of a combustion engine, **characterized in that** it comprises a system for stabilizing a supply voltage of an onboard electrical network (2) according to any one of Claims 1 to 9.
